(19) **Europäisches Patentamt / European Patent Office / Office européen des brevets**

(11) **EP 2 895 428 B1**

(12) **FASCICULE DE BREVET EUROPEEN**

(45) Date de publication et mention de la délivrance du brevet:
**14.11.2018 Bulletin 2018/46**

(21) Numéro de dépôt: **13762460.7**

(22) Date de dépôt: **11.09.2013**

(51) Int Cl.:
*C01G 53/00* (2006.01)    *C01G 51/00* (2006.01)
*C01G 45/12* (2006.01)    *H01M 4/131* (2010.01)
*H01M 10/0525* (2010.01)    *H01M 4/1391* (2010.01)
*H01B 1/08* (2006.01)    *H01M 4/36* (2006.01)
*H01M 4/38* (2006.01)    *H01M 4/485* (2010.01)
*H01M 4/505* (2010.01)    *H01M 4/62* (2006.01)
*H01M 4/525* (2010.01)    *H01M 4/587* (2010.01)

(86) Numéro de dépôt international:
**PCT/EP2013/068835**

(87) Numéro de publication internationale:
**WO 2014/041029 (20.03.2014 Gazette 2014/12)**

(54) **MATERIAU D'ELECTRODE POSITIVE POUR ACCUMULATEUR LITHIUM-ION**

POSITIVELEKTRODENMATERIAL FÜR LITHIUM-IONEN-BATTERIEN

POSITIVE ELECTRODE MATERIAL FOR LITHIUM-ION BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.09.2012 FR 1258615**

(43) Date de publication de la demande:
**22.07.2015 Bulletin 2015/30**

(73) Titulaires:
• **SAFT**
  **93170 Bagnolet (FR)**
• **Umicore**
  **1000 Brussels (BE)**

(72) Inventeurs:
• **JORDY, Christian**
  **F-33440 Saint Louis de Montferrand (FR)**
• **CAILLON, Georges**
  **F-33520 Bruges (FR)**
• **HEZEQUE, Thierry**
  **F-33240 Aubie Espessas (FR)**
• **LEVASSEUR, Stéphane**
  **B-1060 Bruxelles (BE)**
• **KOSOVA, Nina V.**
  **Novosibirsk 630117 (RU)**
• **DEVYATKINA, Evgeniya T.**
  **Novosibirsk 630123 (RU)**

(74) Mandataire: **Hirsch & Associés**
  **137, rue de l'Université**
  **75007 Paris (FR)**

(56) Documents cités:
    **JP-A- 2009 059 656**     **US-B1- 6 458 487**

**Description**

DOMAINE DE L'INVENTION

Le domaine technique de l'invention est celui des matières électrochimiquement actives destinées à être utilisées dans l'électrode positive (ou cathode) d'un générateur électrochimique rechargeable (ou accumulateur) de type lithium-ion.

ART ANTERIEUR

Les oxydes lithiés de métaux de transition sont connus comme matière électrochimiquement active (ou matière active) utilisable dans l'électrode positive des accumulateurs au lithium. On utilise le plus souvent comme matière active de l'électrode positive à l'état déchargé un oxyde lithié de métaux de transition de formule générale $Li_xMO_2$, où M représente au moins un métal de transition, tel que Mn, Ni, Co, Al ou un mélange de ceux-ci. Le lithium se désinsère de manière réversible de la structure de l'oxyde lors de la charge de l'accumulateur puis se réinsère dans la structure au cours de la décharge. Dans $LiMO_2$, M est au degré d'oxydation de +3. Lorsque cet oxyde est soumis à un potentiel élevé au cours de la charge de l'accumulateur, le composé $Li_{1-n}MO_2$ se forme par désinsertion du lithium et libération d'électrons selon la réaction suivante :

$$LiMO_2 \rightarrow Li_{1-n}MO_2 + nLi^+ + ne^-.$$

Cette réaction montre que la désinsertion de n moles de lithium s'accompagne de la libération de n moles d'électrons. Pour respecter l'électroneutralité de $Li_{1-n}MO_2$, le degré d'oxydation de M augmente à la valeur 3+n. Lorsque tout le lithium s'est désinséré de la structure de l'oxyde, M se trouve au degré d'oxydation +4. Un tel oxyde ne peut donc échanger qu'un électron par atome de métal M. De ce fait, la capacité théorique maximale de ce type d'oxyde est de l'ordre de 270 mAh/g.

On peut citer comme matière active cathodique couramment utilisée, le composé $Li(Ni_{0,8}Co_{0,15}Al_{0,05})O_2$, qui est un oxyde lithié de nickel-cobalt-aluminium. Ce composé, encore appelé NCA (Nickel-Cobalt-Aluminium), est présent dans l'électrode positive d'accumulateurs au lithium utilisés pour les applications industrielles, telles que les véhicules hybrides électriques et les applications spatiales. Un tel matériau d'électrode a une capacité massique limitée à environ 200 mAh/g et une capacité volumique limitée à environ 880 mAh/cm$^3$.

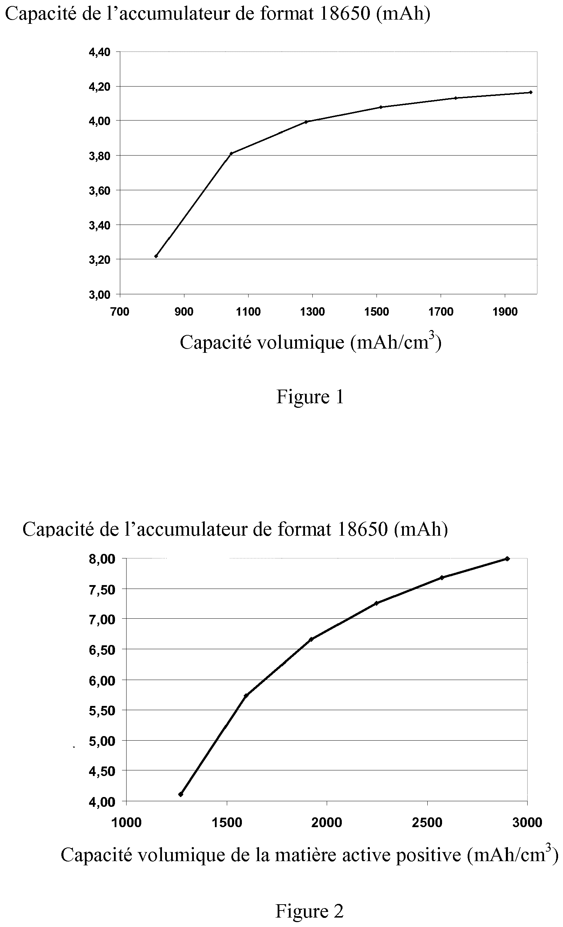

Il est connu d'associer une électrode positive comprenant un matériau de type NCA à une électrode négative de graphite. Le gain de capacité qui peut être obtenu par l'amélioration de l'électrode négative ne se traduit pas par une augmentation correspondante de la capacité de l'accumulateur lorsque la capacité volumique du graphite excède 1100 mAh/cm$^3$ comme le montre la Figure 1.

L'utilisation de nouvelles anodes à base de silicium, de capacité très supérieure aux anodes standard en graphite, associée aux matières actives cathodiques classiques, tel que le NCA, limite fortement le potentiel d'amélioration de la capacité de l'accumulateur. En effet, la masse ou le volume des nouvelles matières actives négatives deviennent faibles relativement aux électrodes positives. Si l'on utilise une électrode négative optimisée en capacité, la Figure 2 montre que toute amélioration de la capacité de l'électrode positive se traduit par une nette augmentation de la capacité de l'accumulateur.

Pour augmenter la capacité théorique de la matière active positive, des composés à base de métaux de transition au degré d'oxydation +2 et contenant deux atomes de lithium par atome métallique ont été étudiés, tels que $Li_2NiO_2$. La capacité théorique de ce type de composés est d'environ 510 mAh/g. Néanmoins, la capacité réversible de ce matériau est faible (de l'ordre de 100 mAh/g). Ceci est dû à une instabilité de la structure cristallographique lors de la première charge comme expliqué dans le document Chang Keun Back, Ri-Zhu Yin, Se-Jong Shin, Yoon-Soo Lee, Wanuk Choi and Yang-Soo Kim, Journal of The Electrochemical Society, 159 (6) A887-A893 (2012).

Des silicates et titanates de composition $Li_2MSiO_4$ et $Li_2MTiO_4$ (avec M=Fe, Mn) ont été envisagés afin d'associer capacité et tension élevées grâce à l'effet apporté par l'oxyde de silicium ou l'oxyde de titane. Néanmoins, bien que la capacité théorique massique de ces matériaux soit améliorée (330 mAh/g), leur capacité volumique théorique est d'environ 1250 mAh/cm$^3$, ce qui est comparable à ce qui est obtenu pour un composé n'échangeant qu'un seul électron par atome métallique, par exemple $LiNiO_2$ dont la capacité volumique est de 1220 mAh/cm$^3$.

Des oxydes surlithiés de nickel de manganèse et de cobalt ont également été étudiés. Leur formule peut s'écrire $Li_{1+y}M_{1-y}O_2$ ou encore $xLi_2MnO_3,(1-x)LiMO_2$ où M est choisi parmi essentiellement Mn, Ni, Co et Fe. Pour ces matériaux, une partie du manganèse, égale à y ou x, a un degré d'oxydation de +4 , elle ne peut donc pas échanger d'électrons en charge. Seul le reste du manganèse et les autres métaux M, au degré d'oxydation +3 peuvent échanger au plus un électron. En réalité, ces matériaux peuvent, lors de la première charge échanger plus d'électron en raison d'une oxydation partielle des ions $O^{2-}$ de la structure. La capacité de ces matériaux est plus élevée que les matériaux de type $LiMO_2$,

mais elle n'est pas optimisée en raison d'une teneur en lithium trop faible (au total 1+x par formule) par rapport au nombre d'électrons théorique que pourraient décharger les éléments électrochimiquement actifs (au total jusqu'à 2 par formule), sauf pour x=1 correspondant à $Li_2MnO_3$.

Pour les matériaux de type $Li_2MnO_3$, la quantité de lithium est optimisée par rapport au nombre d'électrons échangeables par le manganèse. Néanmoins, un atome d'oxygène doit être totalement oxydé pour permettre la première charge car le manganèse dans $Li_2MnO_3$ est à son degré d'oxydation maximal de +4 et ne peut s'oxyder davantage. Ce matériau possède une capacité massique théorique de 459 mAh/g et une capacité volumique théorique de 1622 mAh/cm$^3$. De plus la capacité réversible maximum est de 250 mAh/g. On cherche un matériau présentant des capacités massiques et volumiques supérieures.

Le document JP 2009-274940 décrit un oxyde lithié à base de manganèse de formule $Li_{1+x}(Mn_{(1-m-n)}Fe_{m-}Ti_n)_{(1-x)}O_2$ où 0<x<1/3 ; 0≤m≤0,60 ; 0≤n≤0,80 et 0<m+n≤0,80. Le composé de l'exemple 4 de ce document a pour formule $Li_{1,29}(Mn_{0,9}Ti_{0,1})_{0,71}O_2$ soit $Li_{1,29}Mn_{0,639}Ti_{0,071}O_2$. Cette formule peut encore s'écrire $Li_{4,04}Mn_2Ti_{0,22}O_{6,26}$ en fixant à 2 le coefficient stoechiométrique de l'élément électrochimiquement actif, c'est-à-dire le manganèse. En établissant la relation d'électroneutralité du composé, on en déduit que le manganèse est au degré d'oxydation +3,8. Ce matériau ne peut échanger que 0,2 électron par atome de manganèse, ce qui est insuffisant pour obtenir un composé présentant une capacité électrochimique élevée. La capacité mesurée de ce composé est de 201 mAh/g.

Le document KR 2009-0126962 décrit une matière active positive pour un accumulateur au lithium comprenant un composé à base de manganèse représenté par la formule $Li_aMn_{(1-b)}M_bO_{(2-c)}D_c$ et par la formule $Li_aMn_{(2-b')}M_{b'}O_{(4-c)}D_c$ avec 0,90≤a≤1,1 ; 0≤b≤0,5 ; 0≤b'≤0,5 ; 0≤c≤0,05 ; M étant choisi dans le groupe consistant en Al, Ni, Co, Mn, Cr, Fe, Mg, Sr, les terres rares et des mélanges de ceux-ci. Ce document décrit un composé de composition $Li_{1,05}Mn_{1,85}Al_{0,1}O_4$. En établissant la relation d'électroneutralité du composé et sachant que l'aluminium utilisé est au degré d'oxydation +3, on en déduit que le manganèse est au degré d'oxydation moyen +3,6. Le manganèse peut s'oxyder jusqu'au degré d'oxydation de +4, ce qui correspond à un échange de 0,4 électron par atome de manganèse. De plus la quantité de lithium dans ces matériaux est inférieure à 1,1 atome de lithium par atome électrochimiquement actif. Ceci est insuffisant pour obtenir un composé présentant une capacité électrochimique optimisée.

Le document JP 2009-295290 décrit un oxyde lithié à base de niobium de formule $Li_xNb_{(1-y)}M_yO_2$ où 1≤x≤2 et 0≤y≤0,5 ; M étant au moins un élément choisi dans le groupe consistant en V, Cr, Mn, Fe, Co, Ni, Mo et W. Le composé de l'exemple 6 de ce document a pour formule $LiNb_{0,75}Mn_{0,25}O_2$. En appliquant la relation d'électroneutralité, on détermine que le degré global d'oxydation de l'ensemble formé par le niobium et le manganèse est de +3. Sachant que le degré maximum d'oxydation moyen pouvant être atteint par l'ensemble formé par le niobium et le manganèse est de +4,5, on en déduit que ce composé peut échanger 1,5 électrons par atome d'élément électrochimiquement actif. Toutefois il ne peut échanger qu'un seul atome de lithium ; par conséquent, ce composé ne pourra échanger qu'un seul électron, ce qui est insuffisant pour obtenir un composé présentant une capacité électrochimique élevée.

JP 2009 059656 A divulgue des composés de formule $Li_xMn_{2-y}L_yO_5$ dans laquelle L est choisi dans le groupe consistant en aluminium, nickel, cobalt, titane, magnésium, zirconium, fer, cuivre et zinc ou un mélange de ceux-ci avec 3≤x≤5 et 0,001≤y≤1 et qui cristallise dans un système orthorhombique.

On recherche donc une matière électrochimiquement active pour une électrode positive d'accumulateur lithium-ion présentant à la fois une capacité massique au moins égale à 240 mAh/g et une capacité volumique au moins égale à 900 mAh/cm$^3$ pour une décharge à température ambiante effectuée au régime de C/20 où C désigne le courant correspondant à une décharge de l'électrode effectuée en une heure. De préférence, on recherche une capacité massique au moins égale à 300 mAh/g et une capacité volumique au moins égale à 1200 mAh/cm$^3$. De préférence encore, on recherche une capacité massique au moins égale à 350 mAh/g et une capacité volumique au moins égale à 1400 mAh/cm$^3$.

On cherche de préférence une matière électrochimiquement active présentant une tension de fonctionnement moyenne d'au moins 2,5 V.

RESUME DE L'INVENTION

L'objet de l'invention est un composé de formule $Li_{4+x}MnM^1_aM^2_bO_c$ dans laquelle :

M$^1$ est choisi dans le groupe consistant en Ni, Mn, Co, Fe et un mélange de ceux-ci ;
M$^2$ est choisi dans le groupe consistant en Si, Ti, Mo, B, Al et un mélange de ceux-ci ;

avec :

$$-1,2 \leq x \leq 3 \ ;$$

$$0 < a \leq 2,5 \; ;$$

$$0 < b \leq 1,5 \; ;$$

$$4,3 \leq c \leq 10 \; ;$$

et

$$c = 4 + a + n.b + x/2$$

où

n= 2 lorsque $M^2$ est choisi dans le groupe consistant en Si, Ti, Mo ou un mélange de ceux-ci ; et
n=1,5 lorsque $M^2$ est choisi dans le groupe consistant en B, Al ou un mélange de ceux-ci.

L'objet de l'invention est caractérisé en particulier par le fait que le composé comprend nécessairement au moins l'élément $M^2$ qui est choisi dans le groupe consistant en Si, Ti, Mo, B, Al ou un mélange de ceux-ci.

Selon un mode de réalisation le composé peut présenter une ou plusieurs des caractéristiques suivantes :

$$0 < x \leq 2 \; ;$$

$$0,5 \leq a \leq 1 \; ;$$

Le composé ne contient pas de molybdène.

$$0 < b \leq 0,5.$$

$$5 \leq c \leq 7.$$

le composé contient une phase dont la structure cristallographique peut être affinée dans une structure cubique ou lamellaire.

Un deuxième objet de l'invention est un matériau composite comprenant le composé qui est l'objet de l'invention avec du carbone en un pourcentage massique inférieur à 20% en poids par rapport au poids du matériau composite.

Un troisième objet de l'invention est une électrode comprenant le composé qui est le premier objet de l'invention.

Un quatrième objet de l'invention est une électrode comprenant le matériau composite qui est le deuxième objet de l'invention.

Un cinquième objet est un accumulateur de type lithium-ion comprenant une électrode positive qui est le troisième ou le quatrième objet de l'invention. Dans un mode de réalisation, l'accumulateur comprend une électrode négative comprenant une matière active capable d'insérer du lithium dans sa structure, ladite matière active étant choisie dans le groupe consistant en le carbone, l'étain, le silicium, les composés à base de carbone et de silicium, les composés à base de carbone et d'étain, les composés à base de carbone, d'étain et de silicium et un titanate de lithium, tel que $Li_4TiO_5O_{12}$.

En plus, un procédé de fabrication d'un composé tel que décrit ci-avant, est décrit, ledit procédé comprenant les étapes de :

a) formation du composé par mécanosynthèse ;
b) recuit du composé à une température inférieure à 700°C.

En plus, un procédé de fabrication du matériau composite, tel que décrit ci-avant, est décrit, ledit procédé comprenant les étapes de :

a) formation du composé par mécanosynthèse ;

b) ajout de carbone au composé ;

c) broyage du mélange comprenant le carbone et le composé pour former le matériau composite ;

d) éventuellement un recuit du matériau composite à une température inférieure ou égale à 700°C.

Selon un mode de réalisation le recuit est effectué à une température comprise entre 350 et 450°C, de préférence à une température d'environ 400°C.

BREVE DESCRIPTION DES FIGURES

La Figure 1 représente l'évolution de la capacité (Ah) d'un accumulateur de type 18650 en fonction de la capacité volumique de la matière électrochimiquement active de l'électrode positive. La matière électrochimiquement active de l'électrode positive est du NCA. La matière électrochimiquement active de l'électrode négative est du graphite.

La Figure 2 représente l'évolution de la capacité (Ah) d'un accumulateur de type 18650 en fonction de la capacité volumique de la matière électrochimiquement active de l'électrode positive. La matière électrochimiquement active de l'électrode négative est à base de silicium.

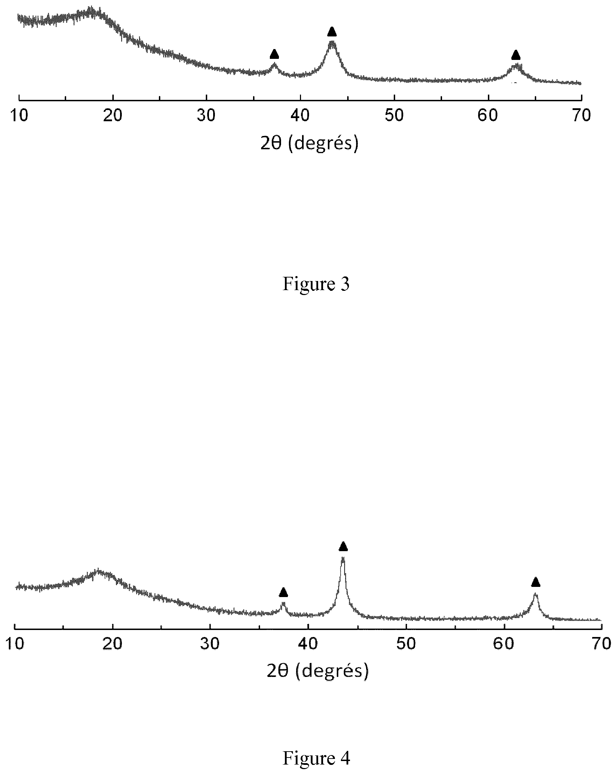

La Figure 3 représente le spectre de diffraction des rayons X d'un mélange comprenant le composé de l'exemple 1 et 5% en poids de carbone. Le composé de l'exemple 1 a été obtenu après 30 minutes de mécanosynthèse. Le mélange a été obtenu après un broyage de 5 minutes du composé de l'exemple 1 avec le carbone.

La Figure 4 représente le spectre de diffraction des rayons X d'un mélange comprenant le composé de l'exemple 4 et 5% en poids de carbone. Le composé de l'exemple 4 a été obtenu après 30 minutes de mécanosynthèse. Le mélange a été obtenu après un broyage de 5 minutes du composé de l'exemple 4 avec le carbone, suivi d'un traitement thermique à 400°C sous argon.

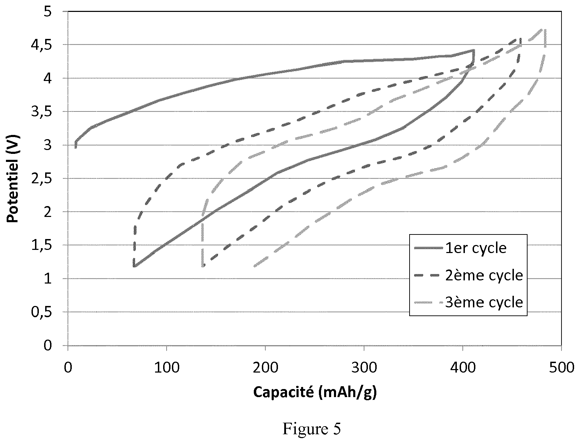

La Figure 5 représente les courbes de charge-décharge du composé de l'exemple 4 après que celui-ci ait été mélangé avec 5% en poids de carbone et traité à 400°C. 1ère charge: tension de coupure : 4,4 V ; 2ème charge : tension de coupure : 4,6 V; 3ème charge : tension de coupure : 4,8 V.

EXPOSE DE MODES DE REALISATION

**L'objet de l'invention**

est un composé de formule $Li_{4+x}MnM^1_aM^2_bO_c$ dans laquelle :

$M^1$ est choisi dans le groupe consistant en Ni, Mn, Co, Fe et un mélange de ceux-ci ;

$M^2$ est choisi dans le groupe consistant en Si, Ti, Mo, B, Al et un mélange de ceux-ci ;

avec :

$-1,2 \leq x \leq 3$; avec de préférence $-0,2 \leq x \leq 2$ ; de préférence encore $0 < x \leq 2$ ;

$0 < a \leq 2,5$ ; avec de préférence $0,5 \leq a \leq 1$ ;

$0 < b \leq 1,5$ ; avec de préférence $0 < b \leq 0,5$ ;

$4,3 \leq c \leq 10$; avec de préférence $5 \leq c \leq 7$ ; et

$$c = 4 + a + n.b + x/2$$

où:

$n = 2$ lorsque $M^2$ est choisi dans le groupe consistant en Si, Ti, Mo ou un mélange de ceux-ci ; et

$n = 1,5$ lorsque $M^2$ est choisi dans le groupe consistant en B, Al ou un mélange de ceux-ci ;

L'objet de l'invention est caractérisé en particulier par le fait que le composé comprend nécessairement au moins l'élément $M^2$ choisi dans le groupe consistant en Si, Ti, Mo, B, Al ou un mélange de ceux-ci. La présence de $M^2$ permet d'augmenter la tension de fonctionnement du composé et permet également d'augmenter la stabilité thermique du matériau à l'état chargé.

Dans un mode de réalisation préféré, $M^1$ est choisi dans le groupe consistant en Mn, Ni et Co et un mélange de ceux-ci.

Dans un mode de réalisation préféré, $M^1$ ne contient pas Mo.

Dans un mode de réalisation préféré, $M^2$ est choisi dans le groupe consistant en Mo et Ti et un mélange de ceux-ci.

Dans un mode de réalisation préféré, ledit composé contient une phase dont la structure cristallographique peut être affinée dans une structure cubique ou lamellaire.

Il est également décrit un composé de formule $Li_{4+x}MnM^1_aM^2_bO_c$ dans laquelle :

$M^1$ est choisi dans le groupe consistant en Ni, Mn, Co, Fe et un mélange de ceux-ci ;

$M^2$ est choisi dans le groupe consistant en Si, Ti, Mo, B, Al et un mélange de ceux-ci ;

avec :

$0 < x \leq 3$; de préférence encore $0 < x \leq 2$ ;
$0 < a \leq 2,5$ ; avec de préférence $0,5 \leq a \leq 1$ ;
$0 \leq b \leq 1,5$ ; avec de préférence $0 \leq b \leq 0,5$ ;
$4,3 \leq c \leq 10$; avec de préférence $5 \leq c \leq 7$ ; et

$$c = 4 + a + n.b + x/2$$

où:

$n = 2$ lorsque $M^2$ est choisi dans le groupe consistant en Si, Ti, Mo ou un mélange de ceux-ci ; et
$n = 1,5$ lorsque $M^2$ est choisi dans le groupe consistant en B, Al ou un mélange de ceux-ci ;

Dans un mode de réalisation préféré, $M^1$ est choisi dans le groupe consistant en Mn, Ni et Co et un mélange de ceux-ci.

Dans un mode de réalisation préféré, $M^1$ est Ni et $0 \leq b \leq 0,5$.

Dans un mode de réalisation préféré, $M^1$ est Mn et $b = 0$.

Dans un mode de réalisation préféré, $5 < c \leq 10$.

Dans un mode de réalisation préféré, $M^1$ ne contient pas Mo.

Le Tableau 1 ci-dessous récapitule les états d'oxydation des éléments Mn, $M^1$ et $M^2$ pour un composé à l'état déchargé, avant la première charge, et à l'état chargé ainsi que le nombre d'électrons échangeables par élément. Par nombre d'électrons échangeables, on entend le nombre d'électrons théoriques qu'un élément électrochimiquement actif peut perdre (respectivement gagner) au cours de la charge (respectivement la décharge) d'une électrode contenant le composé selon l'invention. Le nombre d'électrons échangeables par élément est égal à la différence entre le degré d'oxydation de l'élément dans le composé considéré lors du montage de l'accumulateur, et le degré d'oxydation de l'élément lorsque l'électrode est à l'état chargé.

Tableau 1

| | Degré d'oxydation initial avant la première charge | Degré d'oxydation à l'état chargé | Nombre d'électrons échangeables |
|---|---|---|---|
| Mn | +4 | +4 | 0 |
| $M^1$={Ni, Mn, Co, Fe} | +2 | +4 | 2 |
| $M^2$ ={Si, Ti} | +4 | +4 | 0 |
| $M^2$ = Mo | +3 ou +4 | +6 | 2 ou 3 |

Dans le composé selon l'invention, le ratio entre le nombre d'atomes de lithium et le nombre d'atomes d'éléments électrochimiquement actif est préférentiellement au moins égal à 2. Ce ratio élevé permet d'obtenir une capacité élevée. En effet, comme il a été expliqué au paragraphe sur l'art antérieur, du lithium se désinsère de la structure du composé au cours de la charge. Pour conserver l'électroneutralité du composé, la désinsertion de lithium est compensée par une augmentation du degré d'oxydation du ou des éléments électrochimiquement actifs. Dans le composé selon l'invention, la désinsertion du lithium ne se termine pas lorsque le ou les éléments électrochimiquement actifs ont atteint leur degré d'oxydation maximal, c'est-à-dire lorsqu'ils ne peuvent plus perdre d'électrons. Elle se poursuit car le composé contient à l'état déchargé un excès de lithium par rapport à la quantité d'éléments électrochimiquement actif. Pour conserver l'électroneutralité du composé, la désinsertion du lithium encore présent dans le composé après que les éléments électrochimiquement actifs ont atteint leur degré d'oxydation maximal est compensée par l'oxydation des ions $O^{2-}$ qui se transforment au moins partiellement en oxygène gazeux $O_2$. Ainsi la quantité de lithium qui peut se désinsérer du composé au cours de la charge (donc la quantité d'électrons que peut libérer le composé au cours de la charge) n'est pas limitée par la quantité des éléments électrochimiquement actifs (Ni, Mn, Co, Fe et Mo). Sans vouloir être lié par la théorie, le Demandeur pense que la perte d'atomes d'oxygène crée des lacunes dans la structure du composé permettant ainsi d'obtenir une capacité en décharge élevée.

On peut synthétiser le composé par mécanosynthèse en mélangeant sous atmosphère inerte les précurseurs dans les quantités stoechiométriques désirées, puis en broyant le mélange à l'aide par exemple d'un broyeur à billes. On entend par mécanosynthèse l'ensemble des techniques de matériaux dans lesquelles l'énergie d'activation de la réaction chimique entre les précurseurs est apportée par des moyens mécaniques. On peut aussi envisager de synthétiser le composé par les techniques sol-gel en adaptant les précurseurs.

La composition du composé synthétisé peut être déterminée par la microscopie électronique à balayage (MEB) couplée à la spectrométrie de rayons X par dispersion d'énergie (EDS), par la fluorescence X et par l'analyse par diffraction des rayons X (DRX). L'analyse par diffraction des rayons X permet de déterminer si le composé comprend une seule phase cristalline (matériau monophasé) ou plusieurs phases cristallines (matériau multiphasé). Cette technique permet également de déterminer la nature de ces phases. Selon le premier objet de l'invention, le composé contient une phase dont la structure cristallographique peut être affinée dans une structure cristallographique cubique ou lamellaire. Une structure lamellaire est une structure de type $NaFeO_2$, groupe d'espace R-3M. La présence d'une phase cristallisant dans le système cubique ou lamellaire se traduit par l'apparition d'un pic de diffraction aux rayons X situé à un angle $2\theta$ compris entre 40 et 50°, généralement entre 42 et 47°, de préférence entre 43 et 45°, pour une longueur d'onde correspondant à la raie $K\alpha$ du cuivre. L'intensité des autres pics du spectre de diffraction représente en général moins de 30%, de préférence moins de 20%, de préférence encore moins de 10% de la hauteur du pic principal situé entre 40 et 50°. Les structures cristallines de formes cubique ou lamellaire peuvent être obtenues en préparant le matériau par mécanosynthèse suivie d'un éventuel traitement thermique.

Dans un mode de réalisation préféré, le composé ne comporte pas de phase cristallisant dans le système orthorhombique.

Après avoir synthétisé un des composés tels que décrits ci-avant, on ajoute de préférence au composé obtenu, du carbone, par exemple sous forme de charbon actif ou du noir de carbone. Le mélange est ensuite broyé pour obtenir un matériau composite, c'est-à-dire un assemblage de carbone et du composé selon l'invention présentant une forte capacité d'adhésion entre eux. Le pourcentage de carbone est en général inférieur à 20% en poids par rapport au poids du matériau composite. De préférence, il est compris entre 1 et 10 %, de préférence encore environ 5%.

De préférence, on fait subir au matériau composite une étape de recuit sous gaz inerte à une température inférieure ou égale à 700°C, de préférence entre 350°C et 450°C, par exemple à 400°C. Dans le cas où le composé selon l'invention n'est pas mélangé avec du carbone, l'étape de recuit est effectuée à une température inférieure à 700°C, de préférence entre 350°C et 450°C, par exemple 400°C. Le recuit permet de favoriser la formation de phases cristallines.

La présente invention a aussi pour objet une électrode positive d'accumulateur au lithium contenant comme matière électrochimiquement active le composé ou le matériau composite tels que décrits précédemment. L'électrode selon l'invention est constituée d'un support conducteur servant de collecteur de courant qui est revêtu d'une couche contenant la matière électrochimiquement active selon l'invention et comprenant en outre un liant et un matériau conducteur.

Le collecteur de courant est de préférence un support conducteur bidimensionnel, comme un feuillard plein ou perforé, à base de carbone ou de métal, par exemple en nickel, acier, inox ou aluminium.

Le liant peut contenir un ou plusieurs des composants suivants : le polyfluorure de vinylidène (PVdF) et ses copolymères, le polytétrafluoroéthylène (PTFE), le polyacrylonitrile (PAN), le polyméthacrylate de méthyle ou de butyle, le polychlorure de vinyle (PVC), le polyvinylformal, les polyesters et les polyéthers blocs amides, les polymères de l'acide acrylique, l'acide méthacrylique, l'acrylamide, l'acide itaconique, l'acide sulfonique, les élastomères et les composés cellulosiques.

Parmi les élastomères utilisables, on peut citer les terpolymères éthylène / propylène / diène (EPDM), les copolymères styrène / butadiène (SBR), les copolymères acrylonitrile / butadiène (NBR), les copolymères bloc styrène / butadiène / styrène (SBS) ou styrène / acrylonitrile / styrène (SIS), les copolymères styrène / éthylène / butylène / styrène (SEBS), les terpolymères styrène / butadiène / vinylpyridine (SBVR), les polyuréthanes (PU), les néoprènes, les polyisobutylènes (PIB), les caoutchoucs butyle, et les mélanges de ceux-ci.

Le composé cellulosique peut être une carboxyméthylcellulose (CMC), une hydroxypropylméthylcellulose (HPMC), une hydroxypropylcellulose (HPC) ou une hydroxyéthylcellulose (HEC).

Le matériau conducteur est choisi parmi du graphite, du noir de carbone, du noir d'acétylène (AB), de la suie ou l'un de leurs mélanges.

La présente invention a encore pour objet un accumulateur au lithium comprenant une électrode positive contenant le composé ou le matériau composite tels que décrits précédemment. L'accumulateur selon l'invention comprend en outre au moins une électrode négative, au moins un séparateur et un électrolyte.

L'électrode négative est constituée d'un support conducteur servant de collecteur de courant qui est revêtu d'une couche contenant la matière électrochimiquement active et comprenant en outre un liant et un matériau conducteur. La matière électrochimiquement active est capable d'insérer du lithium dans sa structure. Elle peut être choisie parmi les composés de lithium, un matériau carboné susceptible d'insérer du lithium dans sa structure comme le graphite, le coke, le noir de carbone et le carbone vitreux, et un oxyde mixte de lithium et d'un métal de transition tel que le nickel, le cobalt ou le titane. Elle peut aussi contenir de l'étain, du silicium, des composés à base de carbone et de silicium, des composés à base de carbone et d'étain et des composés à base de carbone, d'étain et de silicium et un oxyde de titane tel que $Li_4Ti_5O_{12}$. Elle peut comprendre du silicium dont la surface est greffée par un groupe organique tel que décrit dans le document EP-A-2 242 129. Elle peut comprendre un matériau nanocomposite Si C tel que décrit dans le document FR-A-2 885 734. Les anodes utilisées peuvent aussi être constituées d'oxydes, nitrures ou phosphure de métaux de transition.

L'électrolyte est choisi parmi un électrolyte liquide non aqueux comportant un sel de lithium dissous dans un solvant et un électrolyte polymère solide conducteur ionique des ions lithium, comme par exemple l'oxyde de polyéthylène (PEO).

Le sel de lithium est choisi parmi le perchlorate de lithium $LiClO_4$, l'hexafluorophosphate de lithium $LiPF_6$, le tétrafluoroborate de lithium $LiBF_4$, le trifluorométhanesulfonate de lithium $LiCF_3SO_3$, le bis(fluorosulfonyl)imide de lithium $Li(FSO_2)_2N$ (LiFSI), le trifluorométhanesulfonimide de lithium $LiN(CF_3SO_2)_2$ (LiTFSI), le trifluorométhanesulfonéméthide de lithium $LiC(CF_3SO_2)_3$ (LiTFSM), le bisperfluoroéthylsulfonimide de lithium $LiN(C_2F_5SO_2)_2$ (LiBETI), le 4,5-dicyano-2-(trifluoromethyl) imidazolide de lithium (LiTDI), le bis(oxalatoborate) de lithium (LiBOB), le tris(pentafluoroethyl)trifluorophosphate de lithium $LiPF_3(CF_2CF_3)_3$ (LiFAP) et les mélanges des précédents.

De préférence, le solvant est un solvant ou un mélange de solvants choisi parmi les solvants organiques usuels notamment les carbonates cycliques saturés, les carbonates cycliques insaturés, les carbonates non cycliques, les esters d'alkyle, comme les formiates, les acétates, les propionates ou les butyrates, les éthers, les lactones comme la gamma-butyrolactone, le bioxyde de tétrahydrothiofène, les solvants nitriles, et les mélanges de ceux-ci. Parmi les carbonates cycliques saturés, on peut citer par exemple le carbonate d'éthylène (EC), le carbonate de fluoroéthylène (FEC), le carbonate de propylène (PC), le carbonate de butylène (BC), et les mélanges de ceux-ci. Parmi les carbonates cycliques insaturés, on peut citer par exemple le carbonate de vinylène (VC), ses dérivés et les mélanges de ceux-ci. Parmi les carbonates non cycliques, on peut citer par exemple le carbonate de diméthyle (DMC), le carbonate de diéthyle (DEC), le carbonate de méthyle éthyle (EMC), le carbonate de dipropyle (DPC) et les mélanges de ceux-ci. Parmi les esters d'alkyle, on peut citer par exemple l'acétate de méthyle, l'acétate d'éthyle, le propionate de méthyle, le propionate d'éthyle, le propionate de butyle, le butyrate de méthyle, le butyrate d'éthyle, le butyrate de propyle et les mélanges de ceux-ci. Parmi les éthers, on peut citer par exemple l'éther de diméthyle (DME) ou de diéthyle (DEE), et les mélanges de ceux-ci.

Le séparateur peut être constitué d'une couche de polypropylène (PP), de polyéthylène (PE), de polytétrafluoroéthylène (PTFE), de polyacrylonitrile (PAN), de polyéthylène-téréphtalate (PET) ou d'un mélange de couches de différentes natures. Les polymères cités peuvent être revêtus d'une couche de céramique.

EXEMPLES

Préparation des échantillons:

Les matériaux ont été synthétisés à partir des précurseurs suivants: $MnO_2$, MnO, NiO, $SiO_2$, $Li_2O$, $TiO_2$, $MoO_2$ et Mo°.

La synthèse a été réalisée par voie mécanique à l'aide d'un broyeur planétaire de type Ago 2. Les différents précurseurs ont été introduits dans les quantités stoechiométriques dans une jarre en inox en boîte à gants sous argon. 200 grammes de billes en inox ont été ajoutés aux 5 grammes de mélange. La mécanosynthèse a été effectuée à une vitesse de rotation de 900 tours/min pendant 30 min. Après le traitement mécanique, la jarre a été ouverte en boîte à gants sous argon et 5% en poids de charbon actif (Mellinckrodt Baker, Inc.) a été ajouté. Un deuxième broyage a été ensuite réalisé à 900 tours/min pendant 5 min. Le composite obtenu a alors été traité thermiquement entre 400°C et 700°C sous circulation d'argon pendant 4h. Des exemples de compositions selon l'invention sont récapitulés dans le Tableau 2 ci-dessous.

Les analyses par diffraction des rayons X ont été réalisées à l'aide d'un diffractomètre Bruker D8 Advance en utilisant la raie $K\alpha$ du Cu. A titre d'exemple, les Figures 3 et 4 représentent respectivement les spectres de diffraction des rayons X des composés des exemples 1 et 4. Les diagrammes de diffraction correspondant à ces exemples ont pu être indexés dans une structure cubique susceptible de se transformer en structure lamellaire après traitement thermique à plus haute température.

Tableau 2

| Ex. n° | | $M^1$ | $M^2$ | a | b | x | n | c = 4+a+n.b+x/2 |
|--------|---|-------|-------|---|---|---|---|-----------------|
| 1 | $Li_4Mn_2O_5$ | Mn | | 1 | 0 | 0 | | 5,00 |
| 2 | $Li_4MnNiO_5$ | Ni | | 1 | 0 | 0 | | 5,00 |
| 3 | $Li_4MnCoO_5$ | Co | | 1 | 0 | 0 | | 5,00 |
| 4 | $Li_4MnNi_{0,5}Mo_{0,5}O_{5,5}$ | Ni | Mo | 0,5 | 0,5 | 0 | 2 | 5,50 |
| 5 | $Li_4MnCo_{0,5}Mo_{0,5}O_{5,5}$ | Co | Mo | 0,5 | 0,5 | 0 | 2 | 5,50 |
| 6 | $Li_4MnNi_{0,5}Ti_{0,5}O_{5,5}$ | Ni | Ti | 0,5 | 0,5 | 0 | 2 | 5,50 |
| 7 | $Li_4Mn_2AlO_{6,5}$ | Mn | Al | 1 | 1 | 0 | 1,5 | 6,5 |
| 8 | $Li_3Mn_{1,5}O_4$ | Mn | | 0,5 | 0 | -1 | | 4 |
| 9 | $Li_{6,6}Mn_{1,8}Mo_{1,5}O_{9,1}$ | Mn | Mo | 0,8 | 1,5 | 2,6 | 2 | 9,1 |
| 10 | $Li_7Mn_{3,5}O_8$ | Mn | | 2,5 | 0 | 3 | | 8 |

Ex. n° 1, 2, 3, 8 et 10 sont des exemples en dehors de la portée de la présente invention. Les performances électrochimiques ont été mesurées à partir d'un mélange de composite avec 28% de noir de carbone (Super P de Timcal). Ce composite a ensuite été testé dans une demi-cellule (par exemple en pile bouton) en utilisant du lithium métallique comme contre électrode. L'électrolyte est constitué d'un mélange EC:DMC et d'un sel $LiPF_6$ de concentration 1 M.

Les cycles ont été réalisés entre 1,2 V et 4,8 V à un régime de C/20. La Figure 5 représente les courbes de charge-décharge du composé de l'exemple 4 après que celui-ci ait été mélangé avec 5% en poids de carbone et traité à 400°C. 1ère charge: tension de coupure : 4,4 V ; 2ème charge tension de coupure 4,6 V; 3ème charge tension de coupure 4,8 V. Les valeurs de capacité massique mesurées en décharge ont été reportées dans la dernière colonne du Tableau 3.

Tableau 3

| Exemple n° | | I | II | III | IV | V | VI | VII | VIII | IX |
|------------|---|---|----|-----|----|---|----|-----|------|-----|
| 1 | $Li_4Mn_2O_5$ | 2 | 4 | 4 | 493 | 1952 | 490 | 1940 | 370 | 1465 |
| 2 | $Li_4MnNiO_5$ | 2 | 4 | 4 | 484 | 1970 | 430 | 1743 | 290 | 1176 |
| 3 | $Li_4MnCoO_5$ | 2 | 4 | 4 | 484 | 1966 | 401 | 1660 | 300 | 1242 |
| 4 | $Li_4MnNi_{0,5}Mo_{0,5}O_{5,5}$ | 2 | 4 | 4 | 432 | 1809 | 400 | 1671 | 320 | 1337 |
| 5 | $Li_4MnCo_{0,5}Mo_{0,5}O_{5,5}$ | 2 | 4 | 4 | 432 | 1807 | 430 | 1811 | 290 | 1221 |
| 6 | $Li_4MnNi_{0,5}Ti_{0,5}O_{5,5}$ | 1 | 4 | 3 | 359 | 1580 | 430 | 1618 | 240 | 903 |
| 7 | *$Li_4Mn_2AlO_{6,5}$ | 2 | 4 | 4 | 399 | 1527 | | | | |
| 8 | *$Li_3Mn_{1,5}O_4$ | 1 | 3 | 3 | 480 | 1855 | | | | |
| 9 | *$Li_{6,6}Mn_{1,8}Mo_{1,5}O_{9,1}$ | 4,6 | 6,6 | 6,6 | 407 | 1790 | | | | |

(suite)

| Exemple n° | | I | II | III | IV | V | VI | VII | VIII | IX |
|---|---|---|---|---|---|---|---|---|---|---|
| 10 | *Li$_7$Mn$_{3,5}$O$_8$ | 5 | 7 | 7 | 509 | 2092 | | | | |

* Compositions dont la capacité n'a pas été mesurée
I : Nombre d'électrons échangeables en 1$^{ère}$ charge par M$^1$ et M$^2$ par formule
II : Nombre d'atome de lithium échangeables en 1$^{ère}$ charge
III : Nombre d'électrons échangeables en décharge ; ce nombre ne pouvant être supérieur au nombre d'atomes de lithium échangeables en charge
IV : Capacité théorique en décharge (mAh/g)
V : Capacité théorique en décharge (mAh/cc)
VI : Capacité chargée mesurée pour une charge à 4,8 V (mAh/g)
VII : Capacité chargée mesuré (mAh/cc)
VIII : Capacité déchargée mesurée à la tension de coupure de 1,2 V (mAh/g)
IX : Capacité déchargée mesuré à la tension de coupure de 1,2 V (mAh/cc)

Le calcul de la capacité théorique va maintenant être détaillé en prenant comme exemple le composé 1. Dans le composé Li$_4$Mn$_2$O$_5$, le manganèse est globalement au degré d'oxydation moyen +3. Lors de la première charge, l'ensemble des deux atomes de manganèse va s'oxyder au degré d'oxydation +4 échangeant ainsi globalement deux électrons. Comme expliqué ci-avant, la charge n'est pas limitée par le nombre d'électrons échangeables par les éléments électrochimiquement actifs. La désinsertion du lithium ne s'arrête donc pas lorsque tout le manganèse a atteint le degré d'oxydation +4. Elle se poursuit ce qui permet de désinsérer les 4 atomes de lithium. Cette désinsertion est possible grâce à l'oxydation de l'oxygène qui passe probablement du degré d'oxydation (-2) au degré d'oxydation (0) comme cela a déjà été observé dans la littérature. Le composé Li$_4$Mn$_2$O$_5$ peut donc désinsérer 4 atomes de lithium, ce qui correspond à 4 électrons. La capacité théorique chargeable de ce composé est donc 4 $\times$ 26802 mAh/masse molaire de Li$_4$Mn$_2$O$_5$ = 493 mAh/g où 26802 mAh représente la quantité d'électricité correspondant à la circulation d'une mole d'électrons pendant une durée d'une heure. Cette capacité peut ensuite théoriquement être déchargée en réduisant les deux atomes de manganèse du degré d'oxydation +4 au degré d'oxydation +2, soit au total 4 électrons par formule.

Le Tableau 4 ci-dessous compare la capacité théorique du composé de l'exemple 1 en dehors de la portée de la présente invention avec celle de composés selon l'art antérieur. On constate qu'elles sont plus élevées pour le composé de l'exemple 1.

Tableau 4

| | Li$_4$Mn$_2$O$_5$ Ex.1 | Li$_2$MnO$_3$ selon l'art antérieur | xLi$_2$MnO$_3$;(1-x)LiMnO$_2$ selon l'art antérieur | | | | |
|---|---|---|---|---|---|---|---|
| | | | x | | | | |
| | | | 0 | 0,2 | 0,4 | 0,6 | 0,8 |
| Capacité massique théorique (mAh/g) | 493 | 459 | 244 | 289 | 333 | 376 | 418 |
| Capacité volumique théorique (mAh/cm$^3$) | 1952 | 1622 | 830 | 992 | 1151 | 1310 | 1466 |

Le composé de l'exemple 1 présente également les avantages suivants par rapport Li$_2$MnO$_3$ :

- il présente un risque réduit de réactivité vis-à-vis de l'électrolyte. En effet, au cours de la charge, le dégagement gazeux d'oxygène O$_2$ produit par Li$_4$Mn$_2$O$_5$ est moindre que dans le cas de Li$_2$MnO$_3$ ;
- il est plus léger que Li$_2$MnO$_3$ ;
- le nombre d'atome d'oxygène par atome électrochimiquement actif dans Li$_4$Mn$_2$O$_5$ est réduit de 0,5 par rapport à Li$_2$MnO$_3$, ce qui permet d'augmenter significativement la capacité volumique de Li$_4$Mn$_2$O$_5$ ; le volume des anions étant en effet beaucoup plus élevé que celui des cations.

**Revendications**

1. Composé de formule $Li_{4+x}MnM^1_aM^2_bO_c$
   dans laquelle :

   $M^1$ est choisi dans le groupe consistant en Ni, Mn, Co, Fe et un mélange de ceux-ci ;
   $M^2$ est choisi dans le groupe consistant en Si, Ti, Mo, B, Al et un mélange de ceux-ci ;

   avec :

   $$-1{,}2 \leq x \leq 3 \; ;$$

   $$0 < a \leq 2{,}5 \; ;$$

   $$0 < b \leq 1{,}5 \; ;$$

   $$4{,}3 \leq c \leq 10 \; ;$$

   et

   $$c = 4 + a + n.b + x/2$$

   où

   n= 2 lorsque $M^2$ est choisi dans le groupe consistant en Si, Ti, Mo ou un mélange de ceux-ci ; et
   n=1,5 lorsque $M^2$ est choisi dans le groupe consistant en B, Al ou un mélange de ceux-ci.

2. Composé selon la revendication 1, dans lequel $0 < x \leq 2$.

3. Composé selon l'une des revendications 1 et 2, dans lequel $0{,}5 \leq a \leq 1$.

4. Composé selon la revendication 1, dans lequel $0 < b \leq 0{,}5$.

5. Composé selon l'une des revendications 1 à 4, dans lequel $5 \leq c \leq 7$.

6. Composé selon l'une des revendications précédentes ne contenant pas de molybdène.

7. Matériau composite comprenant le composé selon l'une des revendications précédentes et du carbone en un pourcentage massique inférieur à 20% par rapport au poids du matériau composite.

8. Electrode comprenant le composé selon l'une des revendications 1 à 6.

9. Electrode comprenant le matériau composite selon la revendication 7.

10. Accumulateur de type lithium-ion comprenant une électrode positive selon l'une des revendications 8 et 9.

**Patentansprüche**

1. Verbindung der Formel $Li_{4+x}MnM^1_aM^2_bO_c$,
   wobei:

   $M^1$ ausgewählt ist aus der Gruppe, bestehend aus Ni, Mn, Co, Fe und einer Mischung davon;

$M^2$ ausgewählt ist aus der Gruppe, bestehend aus Si, Ti, Mo, B, Al und einer Mischung davon;

mit:

$$-1,2 \leq x \leq 3;$$

$$0 < a \leq 2,5;$$

$$0 < b \leq 1,5;$$

$$4,3 \leq c \leq 10;$$

und

$$c = 4 + a + n.b + x/2$$

wobei

n = 2, wenn $M^2$ ausgewählt ist aus der Gruppe, bestehend aus Si, Ti, Mo oder einer Mischung davon; und
n = 1,5, wenn $M^2$ ausgewählt ist aus der Gruppe, bestehend aus B, Al oder einer Mischung davon.

2. Verbindung gemäß Anspruch 1, wobei $0 < x \leq 2$.

3. Verbindung gemäß einem der Ansprüche 1 und 2, wobei $0,5 \leq a \leq 1$.

4. Verbindung gemäß Anspruch 1, wobei $0 < b \leq 0,5$.

5. Verbindung gemäß einem der Ansprüche 1 bis 4, wobei $5 \leq c \leq 7$.

6. Verbindung gemäß einem der vorangehenden Ansprüche, die kein Molybdän enthält.

7. Verbundmaterial, umfassend die Verbindung gemäß einem der vorangehenden Ansprüche und Kohlenstoff in einem Massenprozentsatz von weniger als 20%, bezogen auf das Gewicht des Verbundmaterials.

8. Elektrode, umfassend die Verbindung gemäß einem der Ansprüche 1 bis 6.

9. Elektrode, umfassend das Verbundmaterial gemäß Anspruch 7.

10. Lithium-Ionen-Batterie mit einer positiven Elektrode gemäß einem der Ansprüche 8 und 9.


**Claims**

1. A compound of formula $Li_{4+x}MnM^1{}_aM^2{}_bO_c$
wherein:

$M^1$ is selected from the group consisting in Ni, Mn, Co, Fe and a mixture thereof;
$M^2$ is selected from the group consisting in Si, Ti, Mo, B, Al and a mixture thereof;

with:

$$-1.2 \leq x \leq 3;$$

$$0 < a \leq 2.5;$$

$$0 < b \leq 1.5;$$

$$4.3 \leq c \leq 10;$$

and

$$c = 4 + a + n.b + x/2$$

wherein:

n= 2 when $M^2$ is selected from the group consisting in Si, Ti, Mo or a mixture thereof; and
n=1.5 when $M^2$ is selected from the group consisting in B, Al or a mixture thereof.

2. The compound according to claim 1, wherein $0 < x \leq 2$.

3. The compound according to one of claims 1 and 2, wherein $0.5 \leq a \leq 1$.

4. The compound according to claim 1, wherein $0 < b \leq 0.5$.

5. The compound according to one of claims 1 to 4, wherein $5 \leq c \leq 7$.

6. The compound according to one of the preceding claims not containing any molybdenum.

7. A composite material comprising the compound according to one of the preceding claims and carbon in a mass percentage of less than 20% based on the weight of the composite material.

8. An electrode comprising the compound according to one of claims 1 to 6.

9. An electrode comprising the composite material according to claim 7.

10. A secondary cell of the lithium-ion type comprising a positive electrode according to one of claims 8 and 9.

Capacité de l'accumulateur de format 18650 (mAh)

Capacité volumique (mAh/cm$^3$)

Figure 1

Capacité de l'accumulateur de format 18650 (mAh)

Capacité volumique de la matière active positive (mAh/cm$^3$)

Figure 2

Figure 3

Figure 4

Figure 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2009274940 A
- KR 20090126962
- JP 2009295290 A
- JP 2009059656 A
- EP 2242129 A
- FR 2885734 A

**Littérature non-brevet citée dans la description**

- **CHANG KEUN BACK ; RI-ZHU YIN ; SE-JONG SHIN ; YOON-SOO LEE ; WANUK CHOI ; YANG-SOO KIM.** *Journal of The Electrochemical Society,* 2012, vol. 159 (6), A887-A893